Europäisches Patentamt

European Patent Office

Office européen des brevets

(11) Numéro de publication: **0 043 304**
**B1**

(12) **FASCICULE DE BREVET EUROPEEN**

(45) Date de publication du fascicule du brevet:
30.05.84

(21) Numéro de dépôt: 81400953.6

(22) Date de dépôt: 16.06.81

(51) Int. Cl.³: **F 01 N 7/18,** F 16 L 27/04

(54) **Dispositif de filtration des vibrations du moteur.**

(30) Priorité: 27.06.80 FR 8014349
12.05.81 FR 8109393

(43) Date de publication de la demande:
06.01.82 Bulletin 82/1

(45) Mention de la délivrance du brevet:
30.05.84 Bulletin 84/22

(84) Etats contractants désignés:
**DE GB IT SE**

(56) Documents cités:
**FR - A - 635 926**
**FR - A - 1 038 301**
**FR - A - 2 279 931**
**US - A - 1 915 100**
**US - A - 2 219 752**
**US - A - 2 323 823**
**US - A - 3 047 315**
**US - A - 3 396 992**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Legros, André, 8, square des Villebénettes,**
**F-78160 Marly le Roy (FR)**
Inventeur: **Chalesle, André, 50, avenue du Générale-Foy,**
**F-75008 Paris (FR)**

(74) Mandataire: **Réal, Jacques et al, 8 & 10, avenue Emile**
**Zola, F-92109 Boulogne-Billancourt (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un dispositif monté sur un conduit d'échappement des gaz d'un moteur à explosion et destiné à filtrer les vibrations issues de ce dernier, tout en évitant de créer des pertes de charge dans l'écoulement des gaz. Ce dispositif est disposé le plus près possible du moteur, voire même à la jonction de celui-ci et du conduit d'échappement.

Fréquemment, l'accouplement de ces deux organes est effectué par un boulonnage simple, ce qui entraîne comme inconvénient la transmission de la totalité des vibrations produites par le moteur dans le conduit d'échappement. Outre la production de bruits, cette disposition entraîne, dans certains cas, la rupture dudit conduit.

On connaît également des jonctions constituées par la coopération de l'une des extrémités à joindre, en forme de cône, avec l'autre extrémité en partie sphérique, ces deux éléments étant maintenus en contact au moyen de brides serrées l'une contre l'autre, éventuellement avec l'adjonction en série de ressorts.

L'inconvénient de cette solution réside dans le fait que, pour avoir une bonne étanchéité, il est nécessaire de serrer fortement les deux pièces en contact, ce qui diminue alors leur capacité rotulante mutuelle. Par suite, seuls les gros débattements sont possibles, à l'exclusion des petites vibrations qui, de ce fait, sont transmises sans perte sensible de leur nocivité.

On connaît également une jonction telle que décrite dans le brevet français N° 1038301, composée d'un élément cylindrique s'emmanchant à l'intérieur des extrémité sphériques des conduits à joindre.

Dans ce type de jonction, la simple articulation de l'élément cylindrique pourrait perdre son étanchéité.

La présente invention pallie les inconvénients ci-dessus, une bonne étanchéité des parties mobiles à joindre étant obtenue sans création de gros efforts de serrage entre elles.

Une idée maîtresse sur laquelle repose la filtration des vibrations selon l'invention relève du principe du moindre choc, bien connu en physique.

Expérimentalement, on sait que, lorsque l'on utilise un marteau de masse élevée, l'emplacement de sa prise en main par l'opérateur n'est pas indifférent. En effet, le choc du marteau se répercute inégalement dans chaque zone du manche et, selon sa prise, le choc se répercute dans le bras de l'opérateur avec une intensité plus ou moins grande. Soient P le centre de percussion du marteau et G le centre de gravité de l'ensemble incluant le manche; il existe un lieu P' privilégié pour maintenir le marteau avec le moindre choc en retour, l'emplacement de P' étant lié aux paramètres précédents selon la formule générale:

$$GP \cdot GP' = \rho^2$$

$\rho$ (m) étant le rayon de giration du moment d'inertie I (N · m²) correspondant, relié lui-même à la masse M(N) de l'objet par la formule suivante:

$$I = M\rho^2$$

Selon l'invention, on crée une interruption sur le conduit et, de préférence, on considère, par analogie avec ce qui précède, les vibrations issues du moteur et atteignant l'extrémité libre de la partie du conduit reliée au moteur comme étant des chocs incidents. Par ailleurs, on s'arrange pour que l'extrémité libre de l'autre partie du conduit qui lui fait face, et à laquelle elle va être solidarisée d'une façon adéquate, soit l'emplacement du moindre choc du système.

Selon la présente invention, on ménage sur le conduit d'échappement une interruption située le plus près possible de la source des vibrations, les extrémités dudit conduit se faisant face au niveau de cette dernière ayant la forme d'une zone sphérique, une jonction composite entre ces extrémités étant alors rétablie au moyen d'un premier élément, interne, cylindrique, de préférence aux extrémités biseautées, s'emmanchant à l'intérieur des zones précédentes, d'un second élément, externe, prenant appui par la partie centrale de ce dernier, tandis que ses extrémités peuvent maintenir des segments d'étanchéité contre la partie supérieure des zones sphériques, au moins un espacement étant ménagé entre ces deux éléments permettant la localisation d'une bague, deux enveloppes étant en outre serties sur les extrémités élargies du second élément prennent appui sur les zones sphériques, maintenant ainsi la jonction composite en place.

Dans une forme de réalisation de l'invention, on améliore sensiblement l'étanchéité de la jonction ci-dessus. Pour ce faire, on remplace les segments d'étanchéité précédents qui, dans certaines circonstances, peuvent présenter des insuffisances, par des moyens plus performants qui, en outre et pour certains d'entre eux, diminuent les frottements entre les parties mobiles.

L'invention sera décrite à titre d'exemple non limitatif au regard des fig. 1 à 5 ci-jointes qui représentent respectivement:

la fig. 1, une vue en coupe longitudinale;

la fig. 2, une coupe partielle de la figure précédente;

la fig. 3, une coupe longitudinale d'une première variante d'une jonction selon l'invention assurant l'étanchéité par une chemise à collerette;

les fig. 4 et 5, une coupe analogue de deux autres variantes de l'invention selon lesquelles l'étanchéité est faite par des éléments en graphite.

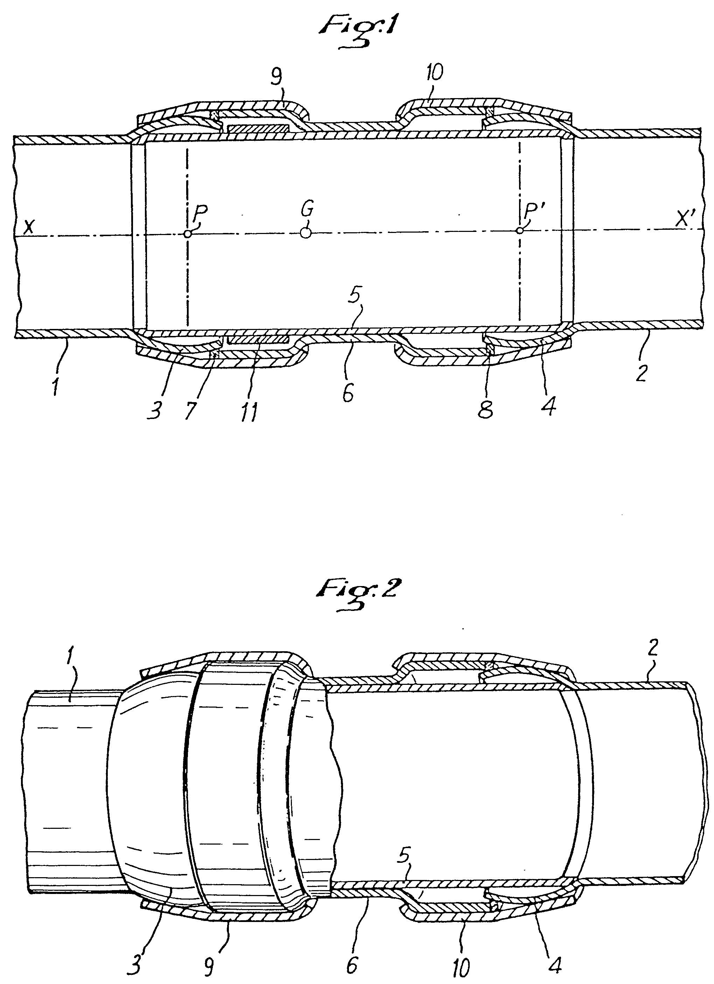

En se référant à la fig. 1, les extrémités des parties de conduit à joindre 1 et 2 présentent respectivement des zones sphériques 3 et 4, reliées entre elles par un élément cylindrique interne 5 aux extrémités biseautées et s'emmanchant à l'intérieur des zones précédentes. Il assure la continuité du conduit avec le minimum de pertes de charge, ainsi que le passage des efforts longitudinaux en compression.

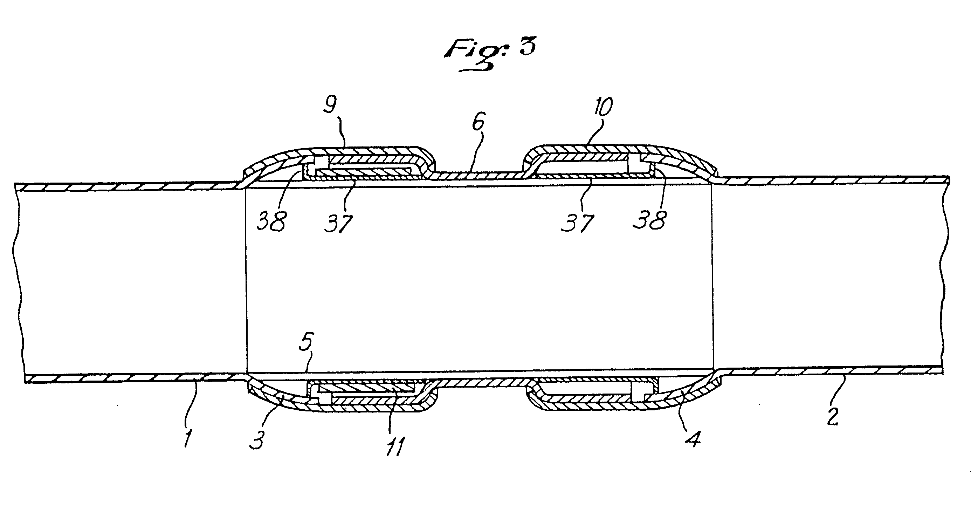

Un second élément de liaison 6, externe, prend appui par sa partie centrale sur l'élément précédent 5, tandis que ses extrémités maintiennent des segments d'étanchéité 7-8 contre la partie supérieure des zones sphériques 3-4. Au moins un espacement est ménagé entre ces deux éléments pour la localisation d'une bague 11. Deux enveloppes 9-10 serties sur les extrémités élargies de l'élément 6 ainsi que sur les zones de sphères maintiennent l'ensemble en place (voir également la fig. 2). De préférence, on disposera une matière à bas coefficient de frottement entre les parties en contact des zones sphériques 3-4 et les parties correspondantes des enveloppes 9-10.

On notera la présence importante de la bague 11 dont l'emplacement exact et la masse sont déterminés expérimentalement, de façon à permettre le déplacement du centre de gravité G de l'ensemble de la jonction. On considère alors sur une ligne axiale virtuelle les points P et P' correspondant respectivement au centre de percussion des vibrations dans la zone sphérique de la partie du conduit 1 réunie au moteur, et le centre du moindre choc recherché que l'on situe a priori dans la zone de la sphère 4; il faut alors que le centre de gravité G soit déplacé, conformément à la formule $GP \cdot GP' = \rho^2$ évoquée plus haut. Cela est précisément obtenu en faisant varier les caractéristiques de la bague 11, ce qui influe sur la masse de l'ensemble de jonction et donc sur son centre de gravité G.

En fonctionnement, la rotation relative des éléments sphériques 3-4 par rapport aux enveloppes 9-10 permet d'encaisser les déplacements dus aux plus grandes vibrations.

Par ailleurs, les autres vibrations survenant dans la zone sphérique 3 ne se retrouvent pas dans la zone 4, puisque les points P, P' et G ont été situés au centre de moindre choc de l'ensemble. On évite de cette façon les transmissions au-delà de la jonction selon l'invention des vibrations indésirables, sources de bruits et de contraintes mécaniques.

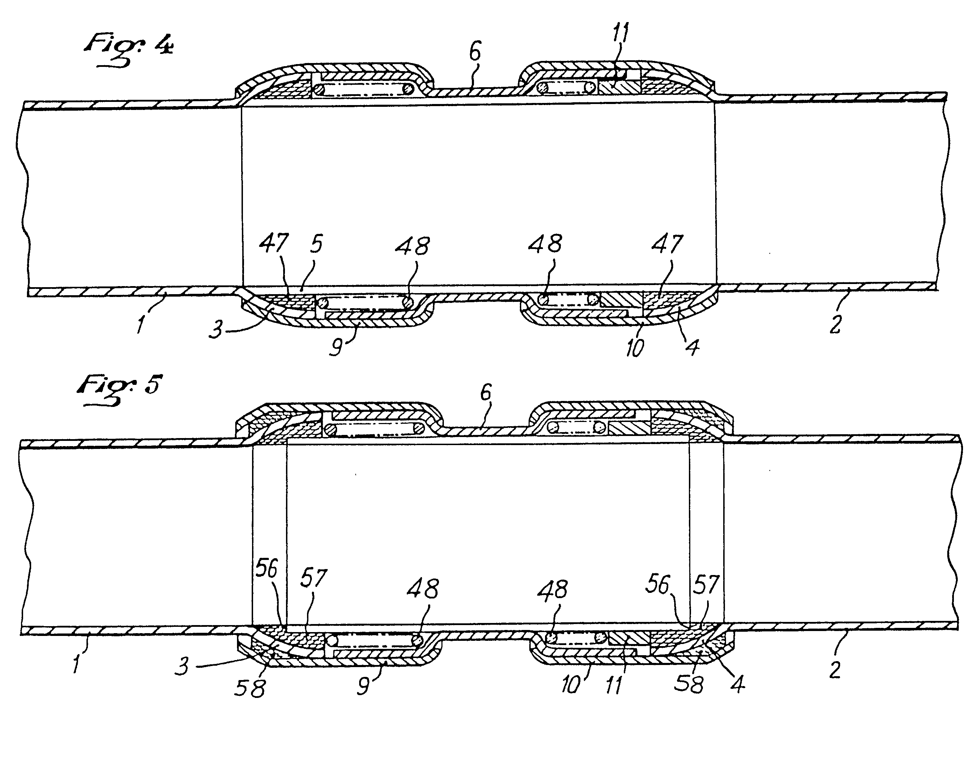

Considérons maintenant la variante de la fig. 3. Comme dans le cas précédent, on retrouve les deux parties 1 et 2 du conduit d'échappement à joindre, leurs extrémités en forme de zones sphériques, respectivement 3 et 4, le premier élément de jonction cylindrique 5 interne, aux extrémités biseautées, le second élément de jonction 6 externe, prenant appui par sa partie centrale sur l'élément 5 précédent, la bague 11 de réglage du cenre de gravité de la jonction composite et les enveloppes 9-10, serties sur les extrémités élargies de l'élément 6 et sur les zones sphériques des extrémités 3-4.

A la différence de la jonction précédente, dans laquelle des segments d'étanchéité sont pressés par les extrémités de l'élément de liaison externe 6 contre la partie supérieure des zones sphériques 3-4 constituant les extrémités des conduits à joindre, selon la présente variante les segments d'étanchéité ont la forme de chemises 37, présentant une collerette 38, glissées aux extrémités de l'élément de jonction interne 5.

Comme on le voit à la fig. 3, le rebord de la collerette 38 fait l'étanchéité avec la face interne des extrémités sphériques 3-4 des conduits à joindre. Elle est pressée et maintenue dans cette position par la partie centrale du second élément de jonction externe 6. La bague 11 est montée sur l'une ou l'autre des chemises 37.

Cette disposition présente l'avantage d'introduire une plus grande perte de charge aux fuites des gaz d'échappement au niveau de la jonction, d'être d'un prix de revient peu élevé, d'un encombrement réduit et d'assurer le minimum de pertes en frottement entre les éléments en contact de la jonction composite.

Dans la variante de la fig. 4, la différence essentielle par rapport à la jonction de la fig. 1 résulte du remplacement des moyens d'étanchéité précédents 37-38 par une bague 47, dont la face externe correspond à celle, interne, des extrémités sphériques 3-4, des conduits à joindre; ces bagues 47 sont en graphite, pressées par un ressort 48 prenant appui sur la partie centrale de l'élément de jonction externe 6 contre la face interne des extrémités évasées 3-4 des conduits à joindre.

Le ressort 48 et la bague 47 sont enfilés sur l'élément de jonction interne 5. Là encore, la nature même du joint de graphite 47 diminue considérablement les frottements dans ces zones et permet une bonne étanchéité aux gaz d'échappement.

On notera encore que la bague 11 de réglage du centre de gravité de la jonction est disposé, dans ce cas, directement à la surface de l'élément de jonction interne 5 et se trouve pressée par le ressort 48 sur le joint de graphite 47.

La variante de la fig. 5 utilise, comme précédemment, des moyens d'étanchéité en graphite; ils sont cependant, dans le cas présent, dédoublés de telle façon qu'une paire d'éléments en graphite 58 soit disposée entre la surface des zones sphériques 3-4 et la face interne des extrémités extérieures des enveloppes 9-10, tandis qu'une autre paire d'éléments en graphite 57 se situe entre la face interne des zones sphériques 3-4 et les extrémités de l'élément de jonction interne 5. On notera que, dans le cas présent, les éléments 57 comportent un décrochement 56 permettant l'introduction des extrémités dudit élément de jonction interne 5 qui, dans ce cas, peuvent être droites. Cette réalisation améliore encore l'étanchéité de la jonction aux gaz d'échappement ainsi que la diminution des frottements.

## Revendications

1. Dispositif de filtration des vibrations issues d'un moteur à explosion vers un conduit d'échappement du type selon lequel on ménage sur ce dernier une interruption, les extrémités dudit conduit se faisant face au niveau de cette dernière ayant la forme d'une zone sphérique, une jonction entre ces extrémités étant alors rétablie au moyen d'un élément cylindrique s'emmanchant à l'intérieur des zones sphériques, caractérisé par le fait que la jonction entre les extrémités (1-2) du conduit est située le plus près possible de la source des vibrations et constituée dudit premier élément (5), interne, cylindrique, s'emmanchant à l'intérieur des zones sphériques (3-4), d'un second élément (6), externe, prenant appui par sa partie centrale sur l'élément interne (5), tandis que ses extrémités présentent un diamètre au moins égal à celui de la partie supérieure des zones sphériques (3-4), des espacements étant ainsi ménagés entre ces deux éléments (5-6) permettant la localisation d'une bague (11), deux enveloppes (9-10) étant en outre serties sur les extrémités élargies du second élément (6), et prennent appui sur les zones sphériques (3-4), maintenant ainsi cette jonction composite en place.

2. Dispositif de filtration des vibrations selon la revendication 1, caractérisé en ce que la masse et l'emplacement de la bague (11) sont expérimentalement adaptés pour déplacer le centre de gravité de l'ensemble de la jonction afin d'amener le centre de moindre choc de cette dernière au niveau de la zone sphérique constituant l'extrémité libre du conduit non relié au moteur.

3. Dispositif de filtration des vibrations selon la revendication 1, caractérisé en ce que l'étanchéité de la jonction aux gaz d'échappement est assurée au moyen d'une chemise (37) glissée aux extrémités de l'élément de jonction interne (5), et qui présente une collerette (38) dont le rebord fait l'étanchéité avec la face interne des extrémités sphériques (3-4) des conduits à joindre, ladite chemise étant pressée et maintenue dans cette position par la partie centrale du second élément de jonction externe (6).

4. Dispositif de filtration des vibrations selon la revendication 1, caractérisé en ce que l'étanchéité de la jonction aux gaz d'échappement est assurée au moyen de bagues en graphite (47) disposées, d'une part, à la surface des extrémités de l'élément de jonction interne (5) et, d'autre part, contre la face interne des extrémités évasées (3-4) des conduits à joindre, les formes de la face en contact des bagues (47) et de ces extrémités évasées (3-4) étant complémentaires, lesdites bagues en graphite (47) étant maintenues en place par pression de ressorts (48) prenant appui sur la partie centrale de l'élément de jonction externe (6).

5. Dispositif de filtration des vibrations selon la revendication 1, caractérisé en ce que l'étanchéité de la jonction aux gaz d'échappement est assurée au moyen de deux paires d'anneaux de graphite disposés de part et d'autre des extrémités évasées (3-4) des conduits à joindre et prenant appui respectivement contre la face interne de l'extrémité extérieure des enveloppes (9-10) et sur les extrémités de l'élément de jonction interne (5) qui sont introduites dans un décrochement (56) prévu à cet effet dans l'anneau en graphite (57), un ressort (48) prenant appui sur la partie centrale de l'élément de jonction externe (6) maintenant ce dernier en position d'étanchéité optimale.

## Patentansprüche

1. Vorrichtung zum Filtern der von einem Verbrennungsmotor auf ein Auspuffrohr übertragenen Schwingungen, bei welcher eine Unterbrechung des Auspuffrohrs vorgesehen ist, wobei die sich im Bereich dieser Unterbrechung gegenüberstehenden Enden des Rohres die Form einer kugelförmigen Zone haben und zwischen diese Enden eine Verbindung vermittels eines zylinderförmigen, in die kugelförmigen Zonen eingesetzten Teils hergestellt wird, dadurch gekennzeichnet, dass die Verbindung zwischen den Enden (1-2) des Rohres so nah wie möglich an der Quelle der Schwingungen angeordnet ist und gebildet ist von dem ersten, in die kugelförmigen Zonen (3-4) eingesetzten inneren zylinderförmigen Teil (5), von einem zweiten äusseren Teil (6), der sich mit seinem Mittelteil auf dem inneren Teil abstützt (5), während seine Enden einen zumindest dem Durchmesser des oberen Teils der kugelförmigen Zonen (3-4) gleichen Durchmesser aufweisen, derart, dass zwischen diesen beiden Teilen (5-6) Zwischenräume ausgebildet sind, in welche ein Ring (11) einsetzbar ist, wobei ferner zwei Hüllen (9-10) auf die erweiterten Enden des zweiten Elements gefalzt sind und sich auf den kugelförmigen Zonen abstützen, derart, dass diese zusammengesetzte Verbindung festgelegt ist.

2. Vorrichtung zum Filtern von Schwingungen nach Anspruch 1, dadurch gekennzeichnet, dass die Masse und die Stelle des Rings (11) experimental bestimmt sind, um den Schwerpunkt der Verbindungseinheit zu verschieben, derart, dass deren Minimalstosszentrum in den Bereich der das freie Ende des mit dem Motor nicht verbundenen Rohrs bildenden kugelförmigen Zone gerückt wird.

3. Vorrichtung zum Filtern von Schwingungen nach Anspruch 1, dadurch gekennzeichnet, dass die Dichtigkeit der Verbindung gegenüber den Auspuffgasen vermittels einer in die Enden des inneren Verbindungsteils (5) geschobenen Hülse (37) gewährleistet wird, die einen Innenflansch (38) aufweist, dessen Rand dichtend an der Innenseite der kugelförmigen Enden (3-4) der zu verbindenden Rohre anliegt, wobei der Mittelteil des zweiten äusseren Verbindungsteils (6) Druck auf die Hülse ausübt und dieselbe in dieser Lage hält.

4. Vorrichtung zum Filtern von Schwingungen nach Anspruch 1, dadurch gekennzeichnet, dass die Dichtigkeit der Verbindung gegenüber den Auspuffgasen durch Graphitringe (47) gewährleistet ist, die einerseits an der Oberfläche des inneren Verbindungsteils (5) und andererseits an die innere Seite der erweiterten Enden (3-4) der zu verbindenden Rohre anliegend angeordnet sind, wobei die Formen der mit den Ringen (47) in Berührung stehenden Seite und dieser erweiterten Enden komplementär sind, und wobei die Graphitringe (47) durch den Druck von sich auf dem Mittelteil des äusseren Verbindungsteils (6) abstützenden Federn (48) in ihrer Lage gehalten werden.

5. Vorrichtung zum Filtern von Schwingungen nach Anspruch 1, dadurch gekennzeichnet, dass die Dichtigkeit der Verbindung gegenüber den Auspuffgasen vermittels zweier Graphitringpaare gewährleistet ist, die beiderseits der erweiterten Enden (3-4) der zu verbindenden Rohre angeordnet sind und sich jeweils gegen die innere Seite des äusseren Ende der Hüllen (9-10) und auf die Enden des inneren Verbindungsteils (5) stützen, die in einen zu diesem Zweck in dem Graphitring (57) vorgesehenen Absatz eingesteckt sind, wobei eine sich auf dem Mittelteil des äusseren Verbindungsteils (6) abstützende Feder (48) den letzteren in optimaler Abdichtlage hält.

## Claims

1. Device for filtering vibrations emanating from an internal combustion engine towards an exhaust pipe of the type according to which this platter is provided with a break, the ends of the said pipe positioned opposite each other at the level of this latter having the shape of a spherical zone, a junction between these ends thus being established by means of a cylindrical element fitted inside the spherical zones, characterized by the fact that the junction between the ends (1-2) of the pipe is situated as close as possible to the vibration's source and constituted by the said first internal cylindrical element (5) fitted inside the spherical zones (3-4), of a second external element (6) bearing by its central part on the internal element (5) whereas its ends present a diameter at least equal to that of the upper part of the spherical zones (3-4), the spacings thus being provided between these two elements (5-6) allowing the localization of a ring (11), two envelopes (9-10) being furthermore, crimped on the enlarged ends of the second element (6) and bearing on spherical zones (3-4) thus maintaining this composite junction in place.

2. Device for filtering vibrations according to Claim 1, characterized in that the mass and the placing of the ring (11) are experimentally adapted so as to displace the centre of gravity of the whole of the junction in order to lead the centre of the least shock of this latter at the level of the spherical zone constituting the free end of the pipe not connected to the engine.

3. Device for filtering vibrations according to Claim 1, characterized in that the tightness of the junction to the exhaust gases is ensured by means of a jacket (37) slipped over the ends of the element of the internal junction (5), and which presents a flange (38) the edge of which achieves the sealing with the internal face of the spherical ends (3-4) of the pipes to be joined, the said jacket being pressed and maintained in this position by the central part of the second element of the external junction (6).

4. Device for filtering vibrations according to Claim 1, characterized in that the tightness of the junction to the exhaust gases is ensured by means of graphite rings (47) disposed, on the one hand, on the surface of the ends of the element of the internal junction (5) and, on the other hand, against the internal face of the ends (3-4) of the pipes to be joined, the shapes of the face in contact with the rings (47) and of these flared ends (3-4) being complementary, the said graphite rings (47) being maintained in place by pressure of springs (48) bearing on the central part of the element of the external junction element (6).

5. Device for filtering vibrations according to Claim 1, characterized in that the tightness of the junction to the exhaust gases is ensured by means of two pairs of graphite rings disposed on either side of the flared ends (3-4) of the pipes to be joined and bearing respectively against the internal face of the external end of the envelopes (9-10) and on the ends of the element of the internal junction (5) that are introduced into an indentation (56) provided for this aim in the graphite ring (57), a spring (48) bearing on the central part of the element of the internal junction (6) maintaining this latter in the optimal sealing position.

## Fig:1

## Fig:2

0 043 304

_Fig. 3_

Fig. 4

Fig. 5

0 043 304